# FASCICULE DE BREVET EUROPEEN

(11) **EP 2 786 069 B1**
(45) Date de publication et mention de la délivrance du brevet: **12.12.2018**
(21) Numéro de dépôt: 12795490.7
(22) Date de dépôt: 25.10.2012
(51) Int. Cl.: F23C 10/00, F23C 10/26, F23C 10/01, F23C 10/08, F23C 10/24

(54) **PROCÉDÉ DE COMBUSTION EN BOUCLE CHIMIQUE AVEC ÉLIMINATION EN PHASE DILUÉE DES CENDRES ET FINES DANS LA ZONE D'OXYDATION ET INSTALLATION UTILISANT UN TEL PROCÉDÉ**
CHEMISCHES KREISLAUFVERBRENNUNGSVERFAHREN MIT VERDÜNNUNGSPHASENENTFERNUNG VON ASCHE UND FEINSTOFFEN IN DER OXIDIERUNGSZONE SOWIE ANLAGE ZUR DURCHFÜHRUNG EINES SOLCHEN VERFAHRENS
CHEMICAL LOOPING COMBUSTION METHOD WITH THE DILUTED-PHASE REMOVAL OF ASH AND FINES IN THE OXIDATION ZONE, AND FACILITY USING SUCH A METHOD

(30) Priorité: 02.12.2011 FR 1103698
(43) Date de publication de la demande: 08.10.2014
(73) Titulaire: IFP Energies nouvelles, 92500 Rueil-Malmaison (FR); Total SA, 92400 Courbevoie (FR)
(72) Inventeur: GUILLOU, Florent, F-69360 Ternay (FR); GAUTHIER, Thierry, F-69530 Brignais (FR); HOTEIT, Ali, F-75012 Paris (FR); RIFFLART, Sébastien, F-75012 Paris (FR)
(74) Mandataire: IFP Energies nouvelles
(86) Numéro de dépôt international: PCT/FR2012/000432
(87) Numéro de publication internationale: WO 2013/079817

(56) Documents cités:
- EP-A2- 0 211 483
- WO-A2-2011/007055
- FR-A1- 2 563 118
- FR-A1- 2 883 773
- FR-A1- 2 956 331
- LYON R K ET AL: "POLLUTION FREE COMBUSTION OF COAL AND OTHER FOSSIL FUELS", MEETING OF THE WESTERN STATES SECTION OF THE COMBUSTION INSTITUTE, XX, XX, 26 octobre 1998 (1998-10-26), pages 1-12, XP008023928,

## Description

### Domaine de l'invention

Le domaine de l'invention est celui de la combustion en boucle chimique d'oxydo-réduction de charges hydrocarbonées solides, pour produire de l'énergie, du gaz de synthèse et/ou de l'hydrogène.
Plus particulièrement, l'invention concerne l'élimination des cendres et fines produites dans l'installation de combustion en boucle chimique.

### Terminologie

Procédé de Chemical Looping Combustion ou CLC : Dans la suite du texte, on entend par procédé CLC (Chemical Looping Combustion) un procédé d'oxydo-réduction en boucle sur masse active. Il convient de noter que, de manière générale, les termes oxydation et réduction sont utilisés en relation avec l'état respectivement oxydé ou réduit de la masse active. Dans une installation de combustion en boucle chimique, la zone d'oxydation est celle dans laquelle la masse oxydo-réductrice est oxydée et la zone de réduction est celle dans laquelle la masse oxydo-réductrice est réduite.

### Dévolatilisation :

Au cours d'un traitement thermique, les composés organiques perdent des matières volatiles, d'abord de l'eau et du dioxyde de carbone, des hydrocarbures liquides puis gazeux, ensuite de l'oxyde de carbone et enfin de l'hydrogène. Ce processus s'appelle la dévolatilisation. La température de dévolatilisation et l'amplitude du phénomène dépendent du composé organique de départ. Ainsi, pour des charbons de rang croissant, la dévolatilisation se produit à température de plus en plus élevée.

### Lit fluidisé :

Dans la suite de la description :
- par lit fluidisé dense, on entend un lit fluidisé dans lequel la fraction de gaz ε_{g} est inférieure à 0,9, de préférence inférieure à 0,8.
- par lit fluidisé dilué, on entend un lit fluidisé dans lequel la fraction volumique des particules d'oxydes métalliques est inférieure à 10% en volume.

Riser : dans la suite de la description, on désignera par "riser" une enceinte verticale de forme tubulaire dans laquelle les fluides sont soumis à un mouvement ascendant.

### Art antérieur

### Problématique des cendres

Pour effectuer la combustion en boucle chimique, on utilise des matériaux transporteurs d'oxygène, tels que les oxydes métalliques qui cèdent leur oxygène dans une zone de réduction (appelée « Réacteur Fuel ») dans les conditions opératoires appropriées. Une fois réduit, le matériau est ensuite transporté vers une zone d'oxydation (appelée « Réacteur Air ») dans laquelle il est réoxydé au contact d'un gaz oxydant (tel que par exemple l'air ou la vapeur d'eau).

Plus généralement, un procédé de combustion en boucle chimique comprend une ou plusieurs zones réactionnelles constituant une zone de réduction, dans lesquelles on effectue la combustion d'un combustible (par exemple une charge hydrocarbonée) par mise en contact avec un solide transporteur d'oxygène qui est ensuite réoxydé dans au moins une zone d'oxydation par mise en contact avec de l'air ou de la vapeur d'eau avant d'être renvoyé vers la ou le(s) zone(s) de combustion (ou réduction). Les zones réactionnelles permettant la mise en oeuvre des réactions de combustion en boucle chimique sont généralement constituées de lits fluidisés ou de lits transportés.

La combustion en boucle chimique (CLC) des charges hydrocarbonées solides est un procédé permettant notamment la production d'énergie (vapeur, électricité...) par récupération de la chaleur dégagée par les réactions de combustion, tout en produisant des fumées riches en CO2. Il est donc possible d'envisager le captage du CO₂ après condensation des fumées et compression des fumées. Il est également possible d'envisager la production de gaz de synthèse, voire d'hydrogène, en contrôlant la combustion et en mettant en oeuvre les purifications requises en aval du procédé de combustion.

Dans les mécanismes réactionnels associés à la combustion en boucle chimique dans la zone de réduction, il est établi que le combustible solide passe par une phase de gazéification, favorisée par la présence de vapeur d'eau ou de dioxyde de carbone et la température, puis que le gaz produit par l'étape de gazéification s'oxyde au contact du matériau transporteur d'oxygène. Si le combustible solide contient des matières volatiles, alors celles-ci se dévolatilisent au moins partiellement au contact du matériau transporteur d'oxygène chaud et sont ensuite oxydées par celui-ci. Il est également possible, dans le cas où le matériau transporteur d'oxygène relargue naturellement l'oxygène en fonction des conditions opératoires, d'avoir une oxydation directe du combustible solide par l'oxygène gazeux relargué par le matériau dans le Réacteur Fuel.

La combustion en boucle chimique des charges solides nécessite des conditions opératoires sévères et contraignantes pour pouvoir réaliser les réactions de combustion. Afin de favoriser la gazéification du combustible, il est nécessaire de se placer à des températures élevées, généralement comprises entre 800 et 1100°C, préférentiellement comprises entre 850 et 1000°C. Le temps requis pour effectuer la gazéification diminue en fonction de la température et est généralement compris entre 30 secondes et 30 minutes. De ce fait, il peut être avantageux d'effectuer une gazéification partielle, de séparer des effluents le résidu combustible non gazéifié et de le recycler. Ainsi, il est possible d'atteindre des taux de conversion (par gazéification) par passe compris entre 50 et 80% dans un domaine de températures comprises entre 850°C et 1000°C avec des temps de réaction compris entre 1 minute et 10 minutes, typiquement compris entre 3 et 5 minutes. En augmentant la pression partielle en gaz oxydant (H₂0, CO₂), il est possible de réduire les temps de gazéification.

Une autre difficulté associée à la mise en oeuvre de la combustion en boucle chimique des charges solides concerne la formation de cendres. En effet, les combustibles solides ont des teneurs en matières minérales non négligeables et une fois la combustion du carbone et de l'hydrogène effectuée, des résidus solides appelés cendres se forment. Le tableau 1 rassemble les analyses de deux charbons A et B à titre d'exemple. On constate que la teneur en cendres des charbons varie selon l'origine de la charge solide, mais que cette teneur est non négligeable. Elle représente typiquement de 5 à 20% de la masse de charbon sec. Certains combustibles solides tel le pet coke contiennent des teneurs en cendres beaucoup plus faibles. Il existe également des combustibles solides plus chargés en cendres.

Ces cendres sont essentiellement constituées d'oxyde de silicium et d'aluminium, mais elles contiennent également d'autres composants, comme illustré à titre d'exemple dans le tableau 1.

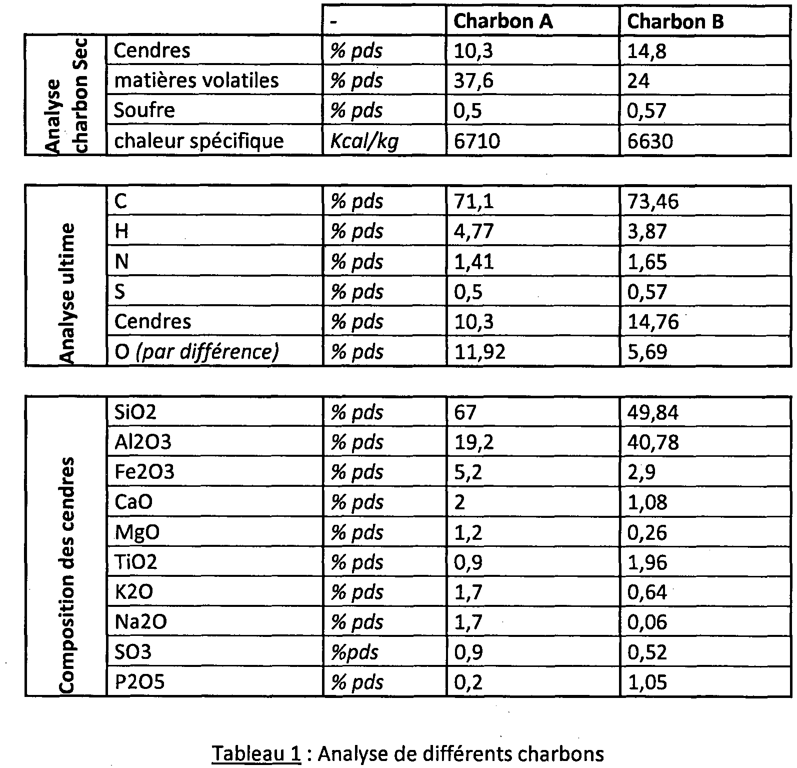

Les cendres résultant de la combustion du charbon sont constituées de fines particules résiduelles. Leur température de fusion varie en fonction de leur composition et est généralement comprise entre 1000 et 1500°C. Cependant, à des températures inférieures, par exemple entre 800 et 1000°C, il est possible d'observer un phénomène d'agglomération des particules de cendres qui deviennent collantes. Elles peuvent donc soit s'agglomérer entre elles, soit s'agglomérer avec les particules de matériau transporteur d'oxygène. Compte tenu des conditions de mise en oeuvre dans la combustion en boucle chimique, on distingue alors deux types de cendres:
∘ les cendres volantes: correspondent aux cendres qui sont transportées dans le Réacteur Fuel par les gaz de combustion ;
∘ les cendres agglomérées: correspondent aux cendres qui s'agglomèrent entre elles ou avec le matériau transporteur d'oxygène et qui sont trop lourdes pour être transportées dans le Réacteur Fuel par les gaz de combustion.

Les cendres volantes représentent en général de 50 à 99% des cendres formées, typiquement de 70 à 90%. Leur granulométrie est relativement fine avec en général au moins 25% de fines de taille inférieure à 10 microns et 90% de fines de taille inférieure à 100 microns. Le diamètre de Sauter moyen représentatif de la granulométrie des cendres volantes est en général compris entre 5 et 30 microns, typiquement voisin de 10 microns. La masse volumique de grain de ces cendres est en général comprise entre 2000 et 3000 kg/m3, généralement voisine de 2500 kg/m3.

La granulométrie des cendres agglomérées est plus délicate à estimer et dépend des conditions de mise en oeuvre du procédé. De manière générale, on estime que ces cendres ont une granulométrie supérieure à 100 microns et leur taille peut aller jusqu'à plusieurs millimètres.

Le document FR 2 956 331 A1 décrit un procédé de combustion d'une charge hydrocarbonée de particules solides en boucle chimique selon le préambule de la revendication 1.

La demande de brevet FR 2 850 156 décrit un procédé de combustion en boucle chimique pour lequel le combustible solide est broyé avant l'entrée dans le réacteur de réduction fonctionnant en lit fluidisé circulant, afin de permettre une combustion plus complète et plus rapide. Le procédé produit presque 100% de cendres volantes qui sont séparées des oxydes en circulation. La séparation en aval du lit circulant est d'abord assurée par un cyclone puis par un dispositif comprenant un lit fluidisé par de la vapeur d'eau permettant de séparer les particules d'imbrûlés des particules d'oxyde métallique. L'entraînement d'imbrûlés dans la zone d'oxydation et donc les émissions de CO₂ dans les effluents du réacteur d'oxydation est donc ainsi évité. Les cendres volantes sont séparées des particules d'oxydes dans un second circuit comprenant un séparateur fonctionnant en lit fluidisé. Dans la thèse de N. Berguerand "Design and Operation of a 10 kWth Chemical-Looping Combustor for Solid Fuels", ISBN 978-91-7385-329-3, est décrit un dispositif qui permet d'effectuer la combustion de charbon en mettant en oeuvre une boucle chimique.

Ce dispositif est composé d'un réacteur d'oxydation mettant en oeuvre des particules métalliques, d'un cyclone permettant la séparation des particules et de l'air appauvri après oxydation, d'un lit fluidisé alimenté en oxydes métalliques oxydés par la jambe de retour située sous le cyclone, dans lequel s'effectue la réduction de l'oxyde métallique par combustion du charbon. Le charbon est alimenté dans la partie supérieure du lit fluidisé, dans la phase diluée. Dans le réacteur de réduction, la combustion du charbon s'effectue progressivement : les particules de charbon commencent par descendre et se dévolatilisent dans la phase diluée, à contre-courant des gaz de fluidisation, et dans laquelle les oxydes métalliques ne sont présents qu'en faible quantité; puis elles rentrent en contact avec les oxydes métalliques fluidisés en phase dense. Le temps de séjour important permet de gazéifier le charbon et de produire des gaz de combustion contenant des quantités importantes de monoxyde de carbone et d'hydrogène qui passent dans la phase diluée.
Selon ce document, le réacteur de réduction est équipé d'un séparateur de particules intégré à la phase dense ce qui nécessite l'ajout de gaz additionnel pour réaliser la séparation. Dans ce système, il n'est pas prévu de dispositif spécifique permettant la séparation et l'évacuation des cendres formées pendant la combustion des charges solides.

Pour pallier les inconvénients des deux systèmes décrits précédemment, les demandeurs ont mis au point un procédé de combustion en boucle chimique , qui permet, même à partir de particules de combustible à l'état grossier, d'obtenir une combustion totale de la charge solide en minimisant la quantité de charge solide à recycler, ce qui permet de maximiser le rendement énergétique du procédé. Ce procédé de combustion selon l'invention permet de capter au moins 90% du CO₂ émis par la combustion dans les fumées directement à la sortie du réacteur de combustion, le taux de captage étant défini par le ratio entre la quantité de CO₂ émis dans les fumées issues du réacteur de combustion sur la quantité de CO₂ émis dans le procédé de combustion en boucle chimique.

En sortie du procédé de combustion, le ratio molaire CO/CO₂ des fumées en aval des cyclones est inférieur à 0,05 et le ratio H₂/H₂O est inférieur à 0,05. Ceci est réalisé d'une part grâce à l'optimisation du contact initial entre les particules transportant l'oxygène et le combustible solide pour favoriser les réactions de gazéification du charbon, et d'autre part, par l'optimisation du contact entre les produits de gazéification et les oxydes métalliques afin de produire des effluents ayant subi une combustion totale (H₂, CO et HC < 1% vol. dans les fumées).

Par ailleurs, la séparation des particules de combustible imbrûlé des particules d'oxydes métalliques est effectuée en amont de l'étape de dépoussiérage des fumées du réacteur de réduction pour utiliser au mieux l'énergie cinétique maximale des fumées pour la séparation des deux types de particules.

Le procédé en boucle chimique comprend au moins :
- une mise en contact des particules de charge solide en présence de particules d'oxydes métalliques dans une première zone de réaction opérant en lit fluidisé dense,
- une combustion des effluents gazeux issus de la première zone de réaction en présence de particules d'oxydes métalliques dans une seconde zone de réaction,
- une séparation au sein d'un mélange issu de la deuxième zone de réaction, du gaz, des particules d'imbrûlés, et des particules d'oxydes métalliques dans une zone de séparation,
- une réoxydation des particules d'oxydes métalliques dans une zone d'oxydation avant de les renvoyer vers la première zone de réaction.

En aval de la zone de séparation des particules d'imbrûlés et des particules d'oxydes métalliques, un système de dépoussiérage comportant par exemple un ou plusieurs étages de cyclones peut être prévu pour séparer les particules entraînées dans les fumées de la zone de combustion du Réacteur Fuel. Les cendres volantes sont entraînées dans les fumées vers ce système de dépoussiérage avec les particules de combustible solide imbrûlées. Afin de maximiser le rendement énergétique de l'installation, il est nécessaire de récupérer l'essentiel des particules imbrûlées de combustible et donc d'effectuer un dépoussiérage poussé. Ce dépoussiérage permettra alors de récupérer les particules imbrûlées, mais également une partie importante des cendres volantes qui seront donc recyclées vers le Réacteur Fuel.

Afin d'éliminer les cendres, il est possible de positionner une enceinte comprenant un lit fluidisé sur la conduite canalisant les particules séparées pendant l'étape de dépoussiérage pour éliminer par élutriation les cendres volantes. Ce moyen ne permet cependant pas de contrôler séparément l'élutriation des cendres et l'élutriation des particules imbrûlées. En effet, dans ce cas, une bonne élimination des cendres produites se traduit consécutivement par une élimination importante de particules imbrûlées et donc une baisse du rendement énergétique ou une baisse du taux de captage de CO2.

De plus, dans le cas où des particules du matériau transporteur d'oxygène sont entraînées vers la zone de dépoussiérage, il est nécessaire de dimensionner un lit fluidisé de grandes dimensions afin de laisser un temps suffisant à la séparation par élutriation dans le lit fluidisé.

Afin d'éliminer les cendres produites au niveau de la zone de réduction sans éliminer trop de particules de charge imbrûlée, le demandeur a mis au point une amélioration de ce procédé mettant en oeuvre une configuration particulière de la zone de réduction avec : une première zone de réaction opérant en lit fluidisé dense ; une seconde zone de réaction ; une zone de séparation rapide pour la séparation des particules de charge solide imbrûlées, de cendres volantes et des particules de matériau transporteur d'oxygène au sein d'un mélange issu de la seconde zone de réaction ; un dépoussiérage des fumées ; une zone de division du flux de particules, une partie des particules étant directement recyclée vers la première zone de réaction, l'autre envoyée vers une zone de séparation par élutriation pour récupérer les cendres et recycler les particules denses vers la première zone de réaction.

Cependant, des cendres peuvent également être transportées vers la zone d'oxydation. En effet, au cours de la combustion dans la zone de réduction, la dégradation de la charge produit des cendres de deux types : soit des cendres de foyer agglomérées qui ne sont pas transportées pneumatiquement avec le lit entraîné d'oxydes métalliques, soit des cendres volantes qui sont entraînées avec le lit de solide. Si les premières sont aisément éliminées en fond de réacteur en lit fluidisé par simple écoulement gravitaire, les secondes accompagnent l'oxyde et en l'absence de dispositif de contrôle de leur population dans le lit, elles vont s'y accumuler. On a donc transport des cendres de la zone de réduction vers la zone d'oxydation, et ce d'autant plus lorsqu'aucun dispositif de contrôle de population de cendres n'est implanté dans la zone de réduction.

Les conséquences de l'accumulation de cendres sont multiples, mais engendrent deux inconvénients principaux :
- la perturbation des écoulements de solide par modification de la granulométrie moyenne du lit pouvant entraîner des difficultés de contrôle de la circulation de ce même lit de solide
- la dilution de la fonction de transport d'oxygène des oxydes métalliques entraînant une baisse de performance du procédé.

De manière alternative ou complémentaire à l'élimination des cendres et fines au niveau de la zone de réduction, il est proposé une nouvelle configuration de la zone d'oxydation (ou "réacteur air") qui permet d'exploiter la force motrice de l'air (gaz oxydant) utilisé pour la réoxydation du solide pour effectuer la séparation entre les particules de transporteur d'oxygène (oxyde métallique) et les particules que l'on souhaite éliminer : les cendres et les fines d'oxydes métalliques.

### Description de l'invention

Il est ainsi proposé une nouvelle configuration de la zone d'oxydation (Réacteur Air) comprenant les éléments suivants:
- une séparation des particules au sein d'un mélange issu de la zone réactive d'oxydation en phase diluée, permettant de récupérer avec les fumées la majorité des cendres,
- un dépoussiérage des fumées issues de la zone de séparation,
- l'intégration d'une capacité réacteur sous forme d'une enceinte en lit fluidisé dense pour le contrôle du recyclage du matériau transporteur d'oxygène autour du réacteur air et pour le contrôle de la population de cendres par une élutriation en lit dense.

La problématique des cendres de foyer évoquée précédemment concerne principalement la zone de réduction (Réacteur Fuel). Toutefois, si des cendres de foyer, agglomérées et plus lourdes que les cendres volantes, étaient présentes, celles-ci seraient optionnellement et simplement évacuées par écoulement gravitaire au bas du réacteur Air et extraites, par exemple à l'aide d'une vis sans fin refroidie.

Le fonctionnement du procédé décrit est favorisé par la mise en oeuvre de matériau transporteur d'oxygène ayant une composition granulométrique et une masse volumique de grain favorisant la séparation avec les particules de cendres volantes, de combustible imbrulé et de cendres agglomérées. Il est ainsi préférable d'avoir une composition granulométrique du transporteur d'oxygène telle que 90% des particules en poids ont une granulométrie comprise entre 100 et 500 microns, préférentiellement 90% entre 150 et 300 microns, et de manière encore plus préférentielle 95% compris entre 150 et 300 microns.

Par ailleurs, la masse volumique de grain des particules de transporteur d'oxygène est préférentiellement supérieure à 2500 kg/m3, de manière préférée supérieure à 3400kg/m3, de manière encore plus préférentielle supérieure à 4000 kg/m3.

Par effet de vieillissement chimique ou mécanique, la distribution granulométrique du matériau transporteur d'oxygène évolue au cours du temps et des fines de diamètre moyen majoritairement compris entre 50 et 150 µm se forment. Pour le bon fonctionnement de l'installation, il est souhaitable de conserver une granulométrie en moyenne supérieure à 150 µm. Les fines produites par attrition du matériau transporteur d'oxygène sont donc éliminées en même temps que les cendres selon le procédé décrit dans la présente invention.

### Résumé de l'invention

L'invention concerne un procédé de combustion d'une charge hydrocarbonée de particules solides en boucle chimique dans laquelle circule un matériau transporteur d'oxygène sous forme de particules, dans lequel :
- on met en contact des particules de charge hydrocarbonée avec les particules de matériau transporteur d'oxygène dans une zone de réduction R0 ;
- on met en contact des particules de matériau transporteur d'oxygène issues de la zone de réduction R0 avec un flux de gaz oxydant dans une zone réactive d'oxydation R1 ;
- on sépare les cendres volantes, les fines et les particules de matériau transporteur d'oxygène au sein d'un mélange issu de la zone R1 par élutriation en phase diluée dans une zone de séparation en phase diluée S2 pour évacuer par une conduite de sortie un effluent gazeux (7) comprenant la majeure partie des cendres volantes et des fines de matériau transporteur d'oxygène et envoyer un flux de particules (8) comprenant la majeure partie des particules de transporteur d'oxygène vers la zone de réduction R0, la force motrice nécessaire à l'élutriation en phase diluée dans S2 étant fournie par le flux de gaz oxydant issu de la zone réactive d'oxydation R1.

De préférence, on fait circuler en boucle dans la zone d'oxydation R1 les particules de transporteur d'oxygène au moyen d'une conduite permettant le recyclage d'un flux (10) de particules de transporteur d'oxygène sédimentées dans la phase fluidisée dense, depuis le fond de la zone de séparation S2 vers le bas de la zone d'oxydation R1.

De préférence, on récupère de la chaleur au sein de la phase fluidisée dense constituée en fond de la zone de séparation S2 au moyen d'un échangeur de chaleur E3.

Avantageusement, on introduit un flux de gaz oxydant additionnel (6) en haut de la zone réactive R1 de façon à maintenir une vitesse du gaz à une valeur comprise entre 30 et 300% de la vitesse terminale de chute moyenne des fines de matériau transporteur d'oxygène ayant un diamètre compris entre 50 et 150 µm.

On effectue une séparation poussée des cendres, des fines et des particules de transporteur d'oxygène dans une zone de dépoussiérage S4 pour évacuer un flux de gaz (11) contenant la majeure partie des cendres et des fines et un flux de particules (12) comprenant la majeure partie du matériau transporteur d'oxygène qui est envoyé par une conduite de transport vers la zone de réduction R0.

On effectue ensuite une séparation par élutriation en phase dense dans une zone de séparation par élutriation en phase dense S5 située en aval de la zone de dépoussiérage S4 et fluidisée par un gaz non réducteur (13) permettant de séparer les cendres volantes du matériau transporteur d'oxygène dans le flux de particules (12) pour envoyer un flux de particules (14) riche en particules de transporteur d'oxygène vers la zone de réduction R0 et évacuer un flux de gaz riche en cendres volantes (15).

Avantageusement, on recycle un flux de particules comprenant une partie des particules solides séparées dans la zone de séparation par élutriation en phase dense S5 vers la zone d'oxydation R1.

De préférence, on récupère de la chaleur au sein de la phase fluidisée dense de la zone de séparation S5 au moyen d'un échangeur de chaleur E6.

L'installation pour réaliser la combustion d'une charge hydrocarbonée solide dans une boucle chimique d'oxydo-réduction selon le procédé décrit ci-dessus comprend au moins :
- une zone de réduction R0 ;
- une zone d'oxydation comprenant une zone réactive R1 munie d'une alimentation en particules de transporteur d'oxygène (1) issues de la zone de réduction R0 et d'une alimentation en gaz de fluidisation oxydant (2) et une zone de séparation par élutriation en phase diluée S2 située au-dessus de la zone réactive R1, d'un diamètre significativement plus grand que la zone réactive R1 afin de ralentir la phase mélangée issue de R1 et munie de moyens d'alimentation permettant d'y introduire une phase mélangée (5) comprenant du gaz et des particules provenant de la première zone de réaction R1;
- une conduite de sortie pour évacuer une phase transportée (7) riche en cendres et en fines ;
- une conduite pour recycler un flux de particules (8) riche en matériau transporteur d'oxygène vers la zone de réduction R0.

L'installation peut comprendre un échangeur de chaleur E3 au sein de la phase fluidisée dense constituée au bas de la zone de séparation en phase diluée S2.

L'installation peut comprendre une conduite pour recycler un flux (10) comprenant des particules de transporteur d'oxygène depuis le fond de la zone de séparation S2 vers le bas de la zone réactive R1.

L'installation comprend une zone de dépoussiérage S4 munie d'une conduite d'admission pour recevoir une phase transportée (7) issue de la zone de séparation S2 riche en cendres et en fines, d'une conduite de sortie permettant d'évacuer un flux de gaz (11) contenant la majeure partie des cendres et des fines, et d'une conduite de transport vers la zone de réduction R0 d'un flux de particules (12) comprenant la majeure partie du matériau transporteur d'oxygène.

L'installation comprend également une zone de séparation par élutriation en phase dense S5 située en aval de la zone de dépoussiérage S4, recevant par son admission un flux de particules (12) comprenant la majeure partie du matériau transporteur d'oxygène et comprenant une conduite permettant l'introduction d'un gaz de fluidisation (13), une conduite de transport d'un flux de particules (14) riche en particules de transporteur d'oxygène vers la zone de réduction R0, et une conduite d'évacuation d'un flux de gaz riche en cendres volantes (15).

L'installation peut comprendre une conduite issue de la zone de séparation en phase dense S5 pour recycler vers la zone réactive R1 un flux de particules (17) comprenant une partie des particules solides séparées dans la zone de séparation par élutriation en phase dense S5 . L'installation peut également comprendre un échangeur de chaleur E6 au sein de la phase fluidisée dense dans la zone de séparation S5.

### Liste des figures

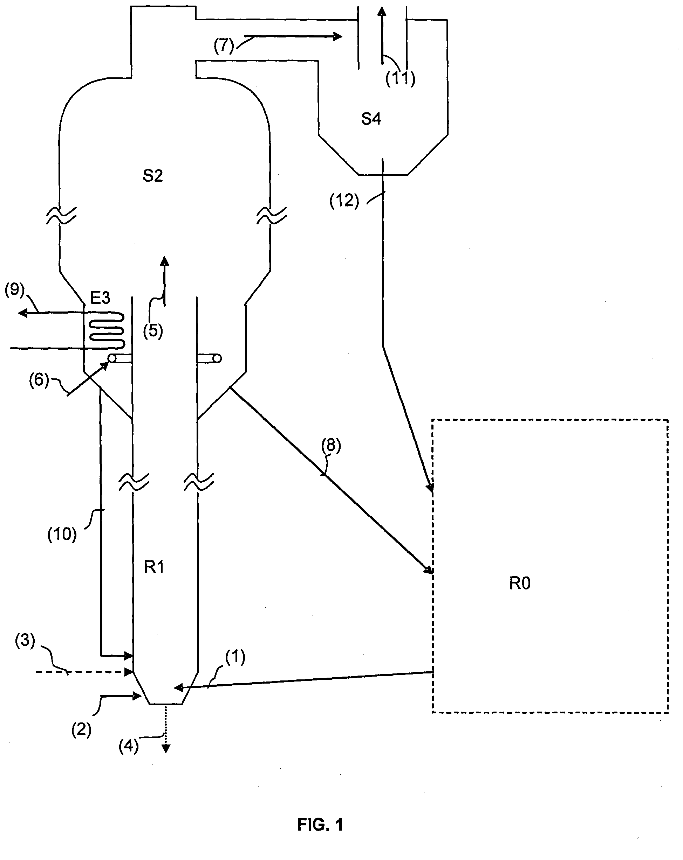

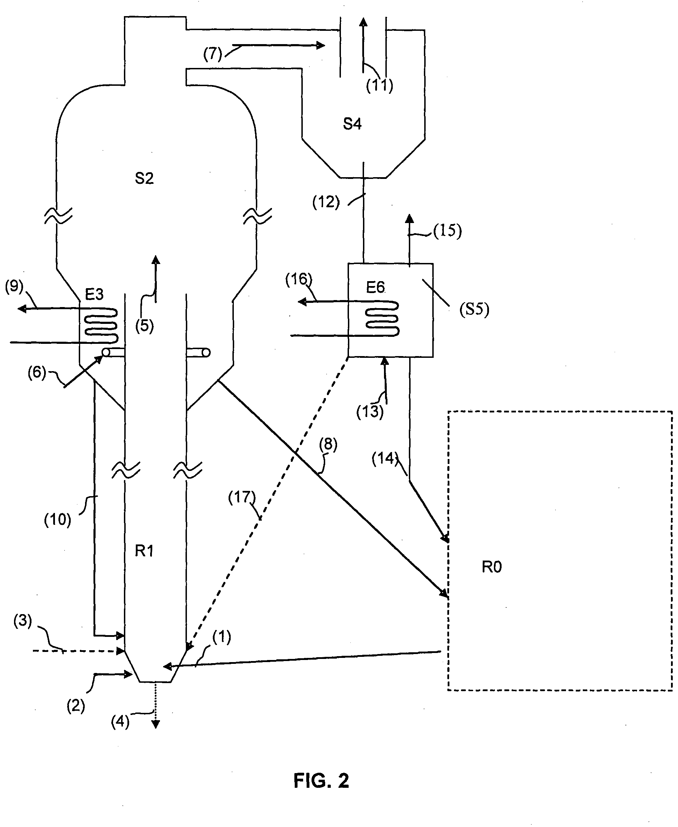

La figure 2 décrit l'invention à titre non limitatif. La figure 1 représente le principe général du dispositif de combustion en boucle chimique avec élimination des cendres en phase diluée dans la zone d'oxydation pour réaliser le procédé selon l'invention, dans le cas optionnel où les fumées issues de la zone de séparation S2 sont soumises à un dépoussiérage au moyen d'un séparateur gaz-solide S4.

La figure 2 représente un mode de réalisation du dispositif de combustion en boucle chimique avec élimination des cendres, dans lequel la séparation des cendres dans la zone d'oxydation est complétée par une séparation en phase dense externe à la zone d'oxydation.

L'invention peut être décrite de manière générale à partir du schéma représenté sur la Figure 1.

### Description de la figure 1.

Le dispositif permettant de mettre en oeuvre le procédé selon l'invention comprend une zone d'oxydation qui se compose notamment :
- d'une zone réactive R1 (ou riser réactif) où se déroule la réaction d'oxydation du matériau porteur d'oxygène qui est issu de la zone de réduction R0 de la boucle chimique de combustion.
- d'une zone de séparation en phase diluée (capacité dédiée à la séparation en phase diluée) des populations de fines de porteur d'oxygène, de cendres volantes et de particules de porteur d'oxygène S2.

Ce dispositif est complété de manière facultative :
- d'un échangeur de chaleur E3 pour l'extraction de chaleur par un fluide caloporteur (9) au sein de la phase dense de la zone de séparation S2
- d'une conduite de recyclage de solide porteur d'oxygène (10) depuis la phase dense de la zone de séparation S2 vers la base de la zone réactive R1.

Le matériau transporteur d'oxygène (MTO) est à l'état partiellement réduit après réaction avec une source de carbone qu'il a contribué pour tout ou partie à oxyder au sein d'un réacteur de combustion ou réacteur de réduction également appelé "réacteur Fuel" R0. Après réaction dans la zone de réduction R0, il est acheminé vers le bas de la zone d'oxydation, au niveau de la zone réactive R1, par exemple par transport pneumatique, pour y être oxydé au contact de l'air par enrichissement de sa structure cristalline en atomes d'oxygène. C'est du fait de cette fonction de réoxydation au contact de l'air que l'ensemble formé par les zones R1 et S2 auxquelles s'ajoutent les variantes facultatives, peut être qualifié de zone d'oxydation ou "réacteur Air". Les particules de matériau transporteur d'oxygène (1) sont introduites par une conduite dans le réacteur air R1 pour y être réoxydées au contact d'un flux d'air (2) fourni avantageusement en surstoechiométrie de l'ordre de 0 % à 20 %, préférentiellement de 5 à 15 %. La géométrie du réacteur est telle que la vitesse de la phase gazeuse dans les conditions de réactions dans la zone réactive R1 varie préférentiellement entre 3 et 30 m/s, préférentiellement entre 5 et 15 m/s et le flux de solide transporteur d'oxygène transporté varie généralement entre 25 et 200 kg/s/m2, et est préférentiellement compris dans la gamme comprise entre 30 et 100 kg/s/m2 pour favoriser un bon contact entre les gaz et les particules d'oxyde métallique. Cette vitesse est suffisante pour assurer le transport pneumatique de particules de matériau transporteur d'oxygène appartenant au groupe B de la classification de Geldart. Un réacteur dans une telle configuration peut alors être qualifié de "riser" réactif. Le temps de séjour des particules de solide est avantageusement compris entre 1 s et 1 min, préférentiellement entre 2 et 20 s. Lors de la circulation du solide dans la boucle chimique, celui-ci peut former des fines ou être extrait avec les cendres. Pour maintenir l'inventaire de matériau transporteur d'oxygène constant dans l'unité, par exemple pour compenser la perte de solide par attrition, on peut avoir recours à un appoint (3) (facultatif) de particules de matériau transporteur d'oxygène introduit par une conduite d'appoint. La majorité des cendres agglomérées dites cendres de foyer telles que décrites précédemment se forme lors de la combustion de la charge hydrocarbonée solide dans le réacteur Fuel (zone de réduction RD) où elles sont éliminées au cours de leur formation. Toutefois, si la configuration particulière de mise en oeuvre de l'invention fait que celles-ci se retrouvent présentes dans le flux (1), en mélange avec les particules de matériau transporteur d'oxygène, elles peuvent être éliminées par écoulement gravitaire en fond de la zone réactive R1. Les cendres de lits ne sont généralement pas transportées pneumatiquement dans les conditions du procédé. Celles-ci se retrouvent en fond du réacteur R1 et peuvent former un flux solide (4) extrait par une conduite alimentant des moyens d'extraction qui peuvent être par exemple une vis sans fin refroidie.
La phase mélangée (5) comprenant du gaz de fluidisation et des solides est transportée dans la zone de séparation en phase diluée S2 où elle entre sous la forme d'un jet dans une capacité d'un diamètre significativement plus grand que celui de la zone R1 de façon à ralentir la phase mélangée. La vitesse des gaz est avantageusement réduite à une vitesse comprise entre 0,1 et 2 m/s, et préférentiellement comprise entre 0,5 et 1,5 m/s. Il se produit alors un phénomène d'élutriation en fonction des granulométries des particules en phase diluée où les particules de matériau transporteur d'oxygène, plus denses et plus grosses que les cendres, ne sont plus transportées et retombent au fond de la capacité pendant que les cendres volantes continuent d'être entraînées.

Les moyens d'alimentation en phase mélangée (5) de la zone de séparation S2 peuvent comprendre des moyens pour casser le jet de la phase mélangée en sortie de la zone réactive R1 et ainsi la ralentir, par exemple un interne de réacteur.

Pour assurer la fluidisation minimale de la phase dense constituée par l'accumulation des particules de matériau transporteur d'oxygène en fond de capacité, il est possible d'introduire du gaz oxydant additionnel (par exemple de l'air additionnel) (6) de façon à maintenir une vitesse du gaz à une valeur comprise entre 30 et 300%, de préférence comprise entre 50 et 150%, de la vitesse terminale de chute moyenne des fines particules d'oxydes dont le diamètre moyen est en général compris entre 50 et 150 µm, qui correspondent aux fines produites par la fragmentation du matériau transporteur d'oxygène par attrition. La possibilité de varier les vitesses des gaz sur gamme permet de s'adapter aux variations de puissance de l'unité et de choisir d'adapter les performances au cas de marche choisi. La hauteur minimale de cette phase dense fluidisée est avantageusement telle que la fluidisation soit homogène dans la partie haute du lit fluidisé, c'est-à-dire généralement une hauteur au moins égale à la moitié du diamètre de l'enceinte de la zone de séparation.
Il résulte de cette séparation par élutriation en phase diluée deux effluents :
- une phase transportée riche en cendres (7) comportant au moins 50% et préférentiellement 90% des cendres issues de la phase mélangée (5), et moins de 50%, préférentiellement moins de 20%, de matériau transporteur d'oxygène contenant essentiellement des fines dont le diamètre moyen est inférieur à 150 µm.
- un écoulement solide (8) riche en matériau transporteur d'oxygène comportant moins de 5% de cendres et préférentiellement moins de 1% de cendres qui alimente la zone de réduction R0 en porteur d'oxygène oxydé.

De façon facultative, on peut implanter un échangeur de chaleur E3 au sein de la phase fluidisée dense constituée au bas de la zone de séparation S2 par l'accumulation des particules de matériau transporteur d'oxygène. Un fluide caloporteur (9) circule dans l'échangeur E3 soit en écoulement purement monophasique (gaz ou liquide) soit, si l'on souhaite générer de la vapeur et maximiser l'échange de chaleur, sous forme vaporisée pour tout ou partie.

De façon facultative, une conduite pour recycler un flux de solide (10) peut être implantée entre la phase fluidisée dense en fond de la zone de séparation S2 et le fond du riser réactif R1. Cette conduite permet de recycler une partie des particules de transporteur d'oxygène sédimentées en fond de la zone de séparation en phase diluée vers la bas de la zone d'oxydation, au niveau de la zone réactive R1. Ceci permet d'effectuer une circulation en boucle des particules de matériau transporteur d'oxygène dans la zone d'oxydation, et par là même d'augmenter le temps de séjour moyen des particules au contact de l'air. Cette variante offre ainsi la possibilité de contrôler le degré d'oxydation du solide et ainsi de répondre aux exigences en transport d'oxygène demandées par la combustion en boucle chimique.

Le flux riche en cendres en phase transportée (7) est acheminé vers un dispositif de séparation gaz-solide de type cyclone S4 qui complètera avantageusement la séparation des cendres et du matériau transporteur d'oxygène : les cendres, des particules fines, sont entraînées (11) avec le gaz, pendant que le flux solide (12) comprenant le matériau transporteur d'oxygène est renvoyé par une conduite vers la zone de réduction R0, tout comme le flux solide (8) issu de la zone d'oxydation. Le flux solide (8) issu de la phase dense de la zone de séparation en phase diluée S2 peut être joint au flux solide (12) issu du séparateur S4, afin d'être optionnellement réunis dans une même conduite d'alimentation de R0.

### Description de la figure 2.

La description de la figure 2 est identique à celle de la figure 1 ci-dessous, à la différence près, qu' en plus de la zone de séparation S2 superposée à la zone réactive R1, l'installation comprend une zone de séparation S5 située en aval du cyclone S4. La phase transportée comprenant du gaz et des solides (7) sort par une conduite de la zone d'oxydation comprenant le riser réactif et la zone de séparation en phase diluée (R1+S2) pour être séparée dans une zone de dépoussiérage sous forme d'un séparateur gaz-solide S4, par exemple un cyclone, dont le diamètre de coupure est typiquement compris entre 10 et 20 µm, afin de former deux effluents : un effluent gazeux (11) entraînant avec lui les fines de solide (fines de matériau transporteur d'oxygène et cendres), et un effluent solide (12) (particules de transporteur d'oxygène et cendres). De manière avantageuse, les fumées (11) subissent un traitement supplémentaire avant d'être évacuées vers l'atmosphère, au minimum un dépoussiérage pour récupérer les cendres à l'extérieur de la zone réactionnelle et un refroidissement par échange thermique permettant une récupération de chaleur, plus éventuellement l'élimination des oxydes de soufre et des oxydes d'azote.
L'effluent solide (12) est acheminé vers le réacteur en lit fluidisé de la zone de séparation par élutriation en phase dense S5. Le réacteur est fluidisé par un gaz de fluidisation (13) choisi parmi ceux qui ne risquent pas de diminuer le degré d'oxydation du matériau transporteur d'oxygène, préférentiellement de vapeur, de l'azote ou même de l'air, ce dernier étant susceptible de participer à augmenter le degré d'oxydation du solide. Les gaz potentiellement réducteurs tels que les hydrocarbures légers, le monoxyde de carbone ou l'hydrogène sont à éviter.
La fonction principale de la zone de séparation par élutriation en phase dense S5 selon la présente invention est de séparer les cendres volantes des particules de transporteur d'oxygène. La séparation est effectuée par une élutriation dans un lit fluidisé en phase dense : la vitesse de la phase gaz dans la zone de séparation en phase dense S5 est adaptée de telle façon à ce que les particules de matériau transporteur d'oxygène, plus grosses et denses que les cendres, demeurent dans le lit fluidisé et que les cendres volantes, moins denses et plus petites que les particules de matériau transporteur d'oxygène, soient entraînées avec la phase gaz par transport pneumatique. De manière générale, la vitesse du gaz est comprise entre 0,3 et 1,5 m/s, préférentiellement dans le domaine compris entre 0,4 et 1m/s pour atteindre des valeurs de flux de particules entraînées variant entre 0,01 et 5 kg/s/m2, préférentiellement comprises entre 0,05 et 0,5 kg/s/m2. Il en résulte deux effluents, un écoulement solide (14) riche en particules de matériau transporteur d'oxygène et comportant moins de 5% de cendres, préférentiellement moins de 1% de cendres en poids, qui est recyclé vers la zone de réduction R0, et un effluent gazeux riche en cendres volantes (15) comportant moins de 30 % en poids de particules de transporteur d'oxygène et préférentiellement moins de 15 % de particules de transporteur d'oxygène.

De façon facultative, on peut implanter un échangeur de chaleur E6 au sein de la phase fluidisée dense constituée au bas de la zone de séparation S5 par l'accumulation des particules de transporteur d'oxygène. Un fluide caloporteur (16) circule dans l'échangeur E6 soit en écoulement purement monophasique (gaz ou liquide) soit, si l'on souhaite générer de la vapeur et maximiser l'échange de chaleur, sous forme vaporisée en tout ou partie.

De façon optionnelle, on peut diriger un flux (17) de solide depuis la zone de séparation par élutriation en phase dense S5 vers la zone réactive d'oxydation R1, ce recyclage a pour effet :
- de faire effectuer une boucle au matériau transporteur d'oxygène dans la zone d'oxydation pour en maximiser le degré d'oxydation, à la manière de la boucle de recyclage par la conduite transportant le flux solide (10) issu de la zone de séparation en phase diluée 52,
- mais aussi de faire circuler de nouveau les cendres restant mélangées au matériau transporteur d'oxygène au travers des zones de séparation S2 et S5.

### Exemple

L'exemple se rapporte à la figure 1.

On considère ici une boucle chimique dans laquelle circule un oxyde métallique porteur d'oxygène d'une puissance thermique brute de l'ordre de 300 MWth soit une circulation de solide équivalente à 1077 kg/s.

On considère la combustion d'un charbon contenant 14 % de cendres alimentant l'unité à raison de 11,6 kg/s. Le charbon est alimenté dans le réacteur fuel avec une granulométrie caractérisée par le fait que moins de 2% du charbon a une taille de particules supérieure à 200 microns.

Le porteur d'oxygène utilisé est un solide choisi de type Illménite d'une densité de 5 000 kg/m3.

Le présent exemple traite de l'élimination des cendres dans le réacteur air (zone d'oxydation) selon la présente invention de telle façon que les cendres éliminées soient équivalentes en flux massique au flux de cendres entrant dans l'unité (correspondant aux cendres de la charge introduite en continu), soit un flux de cendres à éliminer de 1,62 kg/s. Par hypothèse, les cendres sont uniquement éliminées au niveau de la zone S2 telle que décrite dans la figure 1 et dans un cyclone S4 qui y est associé, à la sortie de la zone S2.

Les populations granulométriques des cendres et du matériau transporteur d'oxygène sont présentées dans le tableau 2 suivant :

**Tableau 2 : Granulométrie des différentes particules circulant dans l'installation**

| dpmin | dpmax | Oxyde % | Cendres |
|---|---|---|---|
| µm | µm | poids | % poids |
| 0 | 5 | 0.00 | 10.80 |
| 5 | 10 | 0.00 | 15.74 |
| 10 | 15 | 0.00 | 12.16 |
| 15 | 20 | 0.00 | 9.78 |
| 20 | 25 | 0.00 | 8.01 |
| 25 | 30 | 0.00 | 6.63 |
| 30 | 35 | 0.00 | 5.53 |
| 35 | 40 | 0.00 | 4.64 |
| 40 | 45 | 0.00 | 3.91 |
| 45 | 50 | 0.00 | 3.30 |
| 50 | 60 | 0.00 | 4.03 |
| 60 | 70 | 0.02 | 4.06 |
| 70 | 80 | 0.13 | 2.96 |
| 80 | 90 | 0.50 | 2.17 |
| 90 | 100 | 1.35 | 1.60 |
| 100 | 125 | 6.07 | 1.86 |
| 125 | 150 | 18.53 | 1.44 |
| 150 | 175 | 24.22 | 0.70 |
| 175 | 200 | 20.87 | 0.35 |
| 200 | 250 | 18.25 | 0.22 |
| 250 | 300 | 8.06 | 0.09 |
| 300 | 350 | 1.65 | 0.02 |
| 350 | 400 | 0.29 | 0.01 |
| 400 | 450 | 0.05 | 0.00 |
| 450 | 500 | 0.01 | 0.00 |
| 500 | 750 | 0.00 | 0.00 |
| 750 | 1000 | 0.00 | 0.00 |

Les propriétés de particules et les vitesses terminales de chute (Ut en m/s) en fonction du diamètre moyen de particule (dp en µm) pour les cendres et le matériau transporteur d'oxygène sont données dans le tableau 3 ci-dessous.

**Tableau 3 : propriétés de particules et vitesses terminales de chute (Ut en m/s) en fonction du diamètre moyen de particules (dp en µm) pour les cendres et le matériau transporteur d'oxygène Avec pg la masse volumique du gaz en kg/m3, pp la masse volumique des solides en kg/m3 et µg la viscosité du gaz en Pa.s.**

| | Cendres | MTO |
|---|---|---|
| ρg | 0.36 | 0.36 |
| ρp | 2500 | 5000 |
| µg | 0.000048 | 0.000048 |
| dp µm | Ut | Ut |
| 10 | 3.00E-03 | |
| 25 | 1.70E-03 | |
| 50 | 6.90E-03 | 0.138 |
| 75 | 0.155 | 0.31 |
| 100 | 0.276 | 0.54 |
| 150 | 0.589 | 1.08 |
| 200 | 0.94 | 1.67 |

Pour une vitesse gaz de 0,75 m/s dans la zone S2, on obtient une efficacité de séparation de l'ordre de 50% sur les cendres et de 20% sur le matériau transporteur d'oxygène (chacune des populations concernées représentant des diamètres moyens de particules <150µm).

Cela se traduit par un entraînement en masse de 5,3% du flux massique de matériau transporteur d'oxygène issu du flux (5) et par 49,3 % en masse des cendres issues du flux (5). Ces particules entraînées constituent le flux (7).

Le flux (7) passe ensuite dans un cyclone S4 avec une efficacité de récupération de solide de 91 % pour les cendres et de 99,8 % pour le matériau transporteur d'oxygène.

Cette efficacité de cyclone combinée au séparateur S2 se traduit par l'élimination en continu par la conduite (11) d'une fraction égale à 4,44 % en masse des cendres issues de (5) et à 0,011 % en masse du matériau transporteur d'oxygène.

Cette capacité à éliminer les cendres permet de limiter le taux de cendres présentes dans le lit. Ainsi à la puissance choisie le dispositif doit éliminer 1,67 kg/s de cendres, ce qui correspond à un flux massique de cendres dans le flux (5) de 38,0 kg/s, soit 3,4 % massique du flux total de matériau transporteur d'oxygène et cendres (5). Pour le flux de matériau transporteur d'oxygène, cela se traduit par une élimination des fines à hauteur de 0,114 kg/s de matériau transporteur d'oxygène pour le flux (11) qui s'ajoutent aux 1,67 kg/s de cendres.

En conclusion, on obtient un flux (11) riche en cendres, à hauteur de 93,6 % et le taux de cendres dans le lit circulant est maintenu à 3,4 % même en limitant l'élimination des cendres dans la zone S2 à 50 % (i.e. avec une efficacité à 50 % sur l'élimination des cendres).

## Revendications

1. Procédé de combustion d'une charge hydrocarbonée de particules solides en boucle chimique dans laquelle circule un matériau transporteur d'oxygène sous forme de particules, dans lequel :
- on met en contact des particules de charge hydrocarbonée avec les particules de matériau transporteur d'oxygène dans une zone de réduction R0 ;
- on met en contact des particules de matériau transporteur d'oxygène issues de la zone de réduction R0 avec un flux de gaz oxydant dans une zone réactive d'oxydation R1 ;
- on sépare les cendres volantes, les fines et les particules de matériau transporteur d'oxygène au sein d'un mélange issu de la zone R1 par élutriation en phase diluée dans une zone de séparation en phase diluée S2 pour évacuer par une conduite de sortie un effluent gazeux (7) comprenant la majeure partie des cendres volantes et des fines de matériau transporteur d'oxygène et envoyer un flux de particules (8) comprenant la majeure partie des particules de transporteur d'oxygène vers la zone de réduction R0, la force motrice nécessaire à l'élutriation en phase diluée dans S2 étant fournie par le flux de gaz oxydant issu de la zone réactive d'oxydation R1 ;
- on effectue une séparation poussée des cendres, des fines et des particules de transporteur d'oxygène dans une zone de dépoussiérage S4 pour évacuer un flux de gaz (11) contenant la majeure partie des cendres et des fines et un flux de particules (12) comprenant la majeure partie du matériau transporteur d'oxygène qui est envoyé par une conduite de transport vers la zone de réduction R0 ; et **caractérisé en ce que**:
- on effectue une séparation par élutriation en phase dense dans une zone de séparation par élutriation en phase dense S5 située en aval de la zone de dépoussiérage S4 et fluidisée par un gaz non réducteur (13) permettant de séparer les cendres volantes du matériau transporteur d'oxygène dans le flux de particules (12) pour envoyer un flux de particules (14) riche en particules de transporteur d'oxygène vers la zone de réduction R0 et évacuer un flux de gaz riche en cendres volantes (15).

2. Procédé selon la revendication 1 dans lequel on fait circuler en boucle dans la zone d'oxydation R1 les particules de transporteur d'oxygène au moyen d'une conduite permettant le recyclage d'un flux (10) de particules de transporteur d'oxygène sédimentées dans la phase fluidisée dense, depuis le fond de la zone de séparation S2 vers le bas de la zone d'oxydation R1.

3. Procédé selon l'une des revendications 1 ou 2 dans lequel on récupère de la chaleur au sein de la phase fluidisée dense constituée en fond de la zone de séparation S2 au moyen d'un échangeur de chaleur E3.

4. Procédé selon l'une des revendications précédentes dans lequel on introduit un flux de gaz oxydant additionnel (6) en haut de la zone réactive R1 de façon à maintenir une vitesse du gaz à une valeur comprise entre 30 et 300% de la vitesse terminale de chute moyenne des fines de matériau transporteur d'oxygène ayant un diamètre compris entre 50 et 150 µm.

5. Procédé selon l'une des revendications précédentes dans lequel on recycle un flux de particules comprenant une partie des particules solides séparées dans la zone de séparation par élutriation en phase dense S5 vers la zone d'oxydation R1.

6. Procédé selon l'une des revendications précédentes dans lequel on récupère de la chaleur au sein de la phase fluidisée dense de la zone de séparation S5 au moyen d'un échangeur de chaleur E6.

## Patentansprüche

1. Chemical-Looping-Combustion-Verfahren zum Verbrennen eines Kohlenwasserstoff-Einsatzmaterials aus festen Partikeln, in dem ein sauerstofftragendes Material in Form von Partikeln zirkuliert, wobei:
- Partikel des Kohlenwasserstoff-Einsatzmaterials mit den Partikeln des sauerstofftragenden Materials in einer Reduktionszone R0 in Kontakt gebracht werden;
- Partikel des sauerstofftragenden Materials aus der Reduktionszone R0 mit einem Strom aus oxidierendem Gas in einer Oxidationsreaktionszone R1 in Kontakt gebracht werden;
- Flugasche, Feinstoffe und die Partikel des sauerstofftragenden Materials in einem Gemisch, das aus der Zone R1 stammt, durch Eluieren in verdünnter Phase in einer Trennungszone in verdünnter Phase S2 getrennt werden, um über eine Auslassleitung einen gasförmigen Abstrom (7) abzuleiten, der den Großteil der Flugasche und der Feinstoffe aus sauerstofftragendem Material umfasst, und um einen Strom von Partikeln (8), der den Großteil der sauerstrofftragenden Partikel umfasst, in die Reduktionszone R0 zu schicken, wobei die Treibkraft, die für die Elution in verdünnter Phase in S2 erforderlich ist, von dem Strom von oxidierendem Gas geliefert wird, der aus der Oxidationsreaktionszone R1 stammt;
- eine effektive Trennung der Asche, der Feinstoffe und der sauerstofftragenden Partikel in einer Entstaubungszone S4 durchgeführt wird, um einen Gasabstrom (11), der den Großteil der Asche und der Feinstoffe enthält, und einen Strom von Partikeln (12), der den Großteil des sauerstofftragenden Materials umfasst, abzuleiten, der über eine Transportleitung in die Reduktionszone R0 geschickt wird; und **dadurch gekennzeichnet, dass**:
- eine Trennung durch Elution in dichter Phase in einer Zone zur Trennung durch Elution in dichter Phase S5 durchgeführt wird, die stromabwärts der Entstaubungszone S4 liegt, und durch ein nicht reduzierendes Gas (13) fluidisiert wird, das es ermöglicht, die Flugasche von dem sauerstofftragenden Material in dem Strom von Partikeln (12) zu trennen, um einen Strom von Partikeln (14), der reich an sauerstrofftragenden Partikeln ist, in die Reduktionszone R0 zu schicken, und einen Gasstrom, der reich an Flugasche ist (15), abzuleiten.

2. Verfahren nach Anspruch 1, wobei in der Oxidationszone R1 die sauerstofftragenden Partikel mithilfe einer Leitung fortlaufend zirkuliert werden, die die Rückführung eines Stroms (10) von sauerstofftragenden Partikeln, die sich in der fluidisierten dichten Phase abgesetzt haben, vom Boden der Trennungszone S2 in den unteren Bereich der Oxidationszone R1 ermöglicht.

3. Verfahren nach einem der Ansprüche 1 oder 2, wobei die Wärme in der fluidisierten dichten Phase, die sich am Boden der Trennungszone S2 gebildet hat, mithilfe eines Wärmetauschers E3 zurückgewonnen wird.

4. Verfahren nach einem der vorhergehenden Ansprüche, wobei ein zusätzlicher Strom aus oxidierendem Gas (6) in den oberen Bereich der Reaktionszone R1 eingeführt wird, um eine Geschwindigkeit des Gases auf einem Wert im Bereich zwischen 30 und 300 % der Schlussgeschwindigkeit des durchschnittlichen Falls der Feinstoffe aus sauerstofftragendem Material, das einen Durchmesser im Bereich zwischen 50 und 150 µm aufweist, zu halten.

5. Verfahren nach einem der vorhergehenden Ansprüche, wobei ein Strom von Partikeln, der einen Teil der festen Partikel umfasst, die in der Trennungszone durch Elution in dichter Phase S5 getrennt wurden, in die Oxidationszone R1 zurückgeführt wird.

6. Verfahren nach einem der vorhergehenden Ansprüche, wobei die Wärme in der fluidisierten dichten Phase der Trennungszone S5 mithilfe eines Wärmetauschers E6 zurückgewonnen wird.

## Claims

1. A method for chemical-looping combustion of a hydrocarbon feedstock of solid particles, wherein an oxygen-carrying material circulates in form of particles, comprising:
- contacting hydrocarbon feedstock particles with the oxygen-carrying material particles in a reduction zone R0,
- contacting oxygen-carrying material particles from reduction zone R0 with an oxidizing gas stream in a reactive oxidation zone R1,
- separating the fly ashes, the fines and the oxygen-carrying material particles within a mixture from zone R1 by dilute phase elutriation in a dilute phase separation zone S2 so as to discharge through a discharge line a gaseous effluent (7) comprising the major part of the fly ashes and of the oxygen-carrying material fines, and to send a particle stream (8) comprising the major part of the oxygen-carrying particles to reduction zone R0, the driving force required for dilute phase elutriation in S2 being provided by the oxidizing gas stream coming from reactive oxidation zone R1,
- carrying out deep separation of the ashes, the fines and the oxygen-carrying particles in a dedusting zone S4 in order to discharge a gas stream (11) containing the major part of the ashes and the fines, and a particle stream (12) containing the major part of the oxygen-carrying material that is sent through a delivery line to reduction zone R0, and **characterized in that**:
- carrying out dense phase elutriation separation in a dense phase elutriation separation zone S5 arranged downstream from dedusting zone S4 and fluidized by a non-reducing gas (13) allowing to separate the fly ashes from the oxygen-carrying material in particle stream (12) in order to send a particle stream (14) rich in oxygen-carrying particles to reduction zone R0 and to discharge a gas stream rich in fly ashes (15).

2. A method as claimed in claim 1, wherein the oxygen-carrying particles are circulated in a loop in oxidation zone R1 by means of a line allowing to recycle a stream (10) of oxygen-carrying particles sedimented in the dense fluidized phase, from the bottom of separation zone S2 to the lower part of oxidation zone R1.

3. A method as claimed in any one of claims 1 or 2, wherein heat is recovered in the dense fluidized phase formed in the bottom of separation zone S2 by means of a heat exchanger E3.

4. A method as claimed in any one of the previous claims, wherein an additional oxidizing gas stream (6) is fed to the top of reactive zone R1 so as to maintain a gas velocity ranging between 30 and 300 % of the mean terminal settling velocity of the oxygen-carrying material fines of diameter ranging between 50 and 150 µm.

5. A method as claimed in any one of the previous claims, wherein a particle stream comprising part of the solid particles separated in dense phase elutriation separation zone S5 is recycled to oxidation zone R1.

6. A method as claimed in any one of the previous claims, wherein heat is recovered in the dense fluidized phase of separation zone S5 by means of a heat exchanger E6.
